# EUROPEAN PATENT SPECIFICATION

(11) **EP 4 377 391 B1**
(45) Date of publication and mention of the grant of the patent: **14.10.2026**
(21) Application number: 22850425.4
(22) Date of filing: 24.06.2022
(51) Int. Cl.: C08L 21/00, C08L 7/00, C08L 9/00, C08K 3/04, C08K 3/06, B60C 1/00, B60C 23/00

(54) **TIRE WITH RFID SURROUNDED BY A RUBBER LAYER AND RELATED METHODS**
REIFEN MIT VON EINER GUMMISCHICHT UMGEBENEM RFID UND ZUGEHÖRIGE VERFAHREN
PNEU AVEC RFID ENTOURÉ D'UNE COUCHE DE CAOUTCHOUC ET PROCÉDÉS ASSOCIÉS

(30) Priority: 26.07.2021 US 202163225833 P
(43) Date of publication of application: 05.06.2024
(73) Proprietor: Bridgestone Americas Tire Operations, LLC, Nashville, TN 37201 (US)
(72) Inventor: ROLLINS, Claude David, Knightdale, North Carolina 27545 (US); MILLER, Seth M., Akron, Ohio 44317 (US)
(74) Representative: Kraus & Lederer PartGmbB
(86) International application number: PCT/US2022/073132
(87) International publication number: WO 2023/009922

(56) References cited:
- CN-U- 204 314 922
- CN-U- 206 557 816
- US-A1- 2005 126 704
- US-A1- 2005 132 788
- US-A1- 2006 164 250
- US-A1- 2019 054 781
- US-A1- 2020 094 634
- US-A1- 2021 070 110

## Description

### FIELD

The present application is directed to a tire containing a RFID or electronic communication module with a radio device that is surrounded by a rubber layer and to related methods for curing a tire with the enclosed RFID.

### BACKGROUND

Electronic devices (often referred to as radio frequency information devices or RFID) may be integrated into a tire to provide functions such as identification and tracking during manufacture, distribution, and use of the tire. Such devices can also function to monitor physical parameters such as pressure and temperature during use of the tire.

Given the wide variety of available identification and monitoring devices, a wide variety of mounting configurations also exist for these devices. Exemplary known mounting configurations include incorporating the monitoring device into a tire sidewall, incorporating the monitoring device into the bead filler, attaching the device with a patch or adhesive to the tire sidewall, attaching the device directly to the innerliner with a patch or an adhesive, connecting the device to the rim that supports the tire, and mounting the device to the valve stem of the wheel.

### SUMMARY

Disclosed herein is a tire having an electronic communication module including a radio device where the radio device is surrounded by a rubber layer having a specified T50 cure time at 160 °C. Also disclosed are related methods for curing a tire with an electronic communication module including a radio device surrounded by a rubber layer having a specified T50 cure time at 160 °C.

In a first embodiment, a tire is disclosed which has an electronic communication module including a radio device, with the radio device surrounded by a rubber layer. The rubber layer is comprised of 100 parts of at least one diene-based rubber, at least one filler, and a cure package and the rubber layer has a T50 cure time at 160 °C of about 1.5 to about 3.5 minutes, preferably about 2 to about 3 minutes. According to the first embodiment, the rubber layer has a thickness of about 0.4 to about 3 mm, preferably about 0.5 to about 2 mm.

In a second embodiment, a process is provided for curing a tire with an electronic communication module. According to the process of the second embodiment, an uncured tire carcass and an electronic communication module including an enclosed radio device surrounded by a rubber layer are provided. The rubber layer is comprised of 100 parts of at least one diene-based rubber, at least one filler, and a cure package and the rubber layer has a T50 cure time at 160 °C of about 1.5 to about 3.5 minutes, preferably about 2 to about 3 minutes. According to the second embodiment, the rubber layer has a thickness of about 0.4 to about 3 mm, preferably about 0.5 to about 2 mm. Further according to the process of the second embodiment, the enclosed radio device (i.e., the radio device that is surrounded by the rubber layer) is positioned against at least one component of the uncured tire carcass, and then the uncured tire carcass is cured together with the enclosed radio device.

### DETAILED DESCRIPTION

Disclosed herein is a tire having an electronic communication module including a radio device where the radio device is surrounded by a rubber layer having a specified T50 cure time at 160 °C. Also disclosed are related methods for curing a tire with an electronic communication module including a radio device surrounded by a rubber layer, with the rubber layer having a specified T50 cure time at 160 °C.

In a first embodiment, a tire is disclosed which has an electronic communication module including a radio device, with the radio device surrounded by a rubber layer. The rubber layer is comprised of 100 parts of at least one diene-based rubber, at least one filler, and a cure package and the rubber layer has a T50 cure time at 160 °C of about 1.5 to about 3.5 minutes, preferably about 2 to about 3 minutes. According to the first embodiment, the rubber layer has a thickness of about 0.4 to about 3 mm, preferably about 0.5 to about 2 mm.

In a second embodiment, a process is provided for curing a tire with an electronic communication module. According to the process of the second embodiment, an uncured tire carcass and an electronic communication module including an enclosed radio device surrounded by a rubber layer are provided. The rubber layer is comprised of 100 parts of at least one diene-based rubber, at least one filler, and a cure package and the rubber layer has a T50 cure time at 160 °C of about 1.5 to about 3.5 minutes, preferably about 2 to about 3 minutes. According to the second embodiment, the rubber layer has a thickness of about 0.4 to about 3 mm, preferably about 0.5 to about 2 mm. Further according to the process of the second embodiment, the enclosed radio device (*i.e.,* the radio device that is surrounded by the rubber layer) is positioned against at least one component of the uncured tire carcass, and then the uncured tire carcass is cured together with the enclosed radio device.

### Definitions

The terminology as set forth herein is for description of the embodiments only and should not be construed as limiting the invention as a whole.

As used herein, the term "majority" by weight refers to more than 50% by weight.

Unless otherwise indicated herein, the term "Mooney viscosity" refers to the Mooney viscosity, ML₁₊₄. As those of skill in the art will understand, a rubber composition's Mooney viscosity is measured prior to vulcanization or curing.

As used herein the term "natural rubber" means naturally occurring rubber such as can be harvested from sources such as *Hevea* rubber trees and non-*Hevea* sources (*e.g*., guayule shrubs and dandelions such as TKS). In other words, the term "natural rubber" should be construed so as to exclude synthetic polyisoprene.

As used herein, "nitrogen surface area" refers to the nitrogen absorption specific surface area (N₂SA) of particulate material, including but not limited to silica filler, as discussed herein. The nitrogen surface area can be determined by various standard methods including those mentioned below.

As used herein, the term "phr" means parts per one hundred parts rubber. The 100 parts rubber refers to 100 parts of the at least one diene-based elastomer.

As used herein the term "polyisoprene" means synthetic polyisoprene. In other words, the term is used to indicate a polymer that is manufactured from isoprene monomers, and should not be construed as including naturally occurring rubber (*e.g*., *Hevea* natural rubber, guayule-sourced natural rubber, or dandelion-sourced natural rubber). However, the term polyisoprene should be construed as including polyisoprenes manufactured from natural sources of isoprene monomer.

### Electronic Communication Module

As mentioned above, the present disclosure generally relates to a tire containing a RFID or electronic communication module including a radio device that is surrounded by a rubber layer and to related methods for curing a tire with the enclosed RFID. According to the first and second embodiments disclosed herein, the electronic communication module includes a radio device which can generally be understood as including at least a main body and an antenna. As discussed in more detail below, the radio device is surrounded by a rubber layer prior to being cured with other components of the tire (*e.g.,* inner liner, body ply or plies, sidewall, etc.). By stating that the radio device is surrounded by a rubber layer is meant that it is enclosed by the rubber layer and/or entirely surrounded by it. As discussed in more detail *infra,* while the rubber layer that surrounds the radio device is discussed in the singular, in certain embodiments the radio device can be surrounded using two separate sheets of the rubber layer (each having the same composition and same T50 cure time) to result in what is discussed herein as "a rubber layer" or "the rubber layer." The rubber layer has a specified T50 cure time (as measured at 160 °C) which is sufficiently low (or fast) to provide an advantage in ensuring that the radio device is positioned appropriately within the tire by minimizing or eliminating movement of the radio device during curing due to the relatively fast cure time of the rubber layer. Thus, according to the first and second embodiments disclosed herein, an electronic communication module with a radio device that has been enclosed in the rubber layer will remain enclosed or surrounded by the rubber layer even after curing thereby reducing the chances of the radio device moving through or into the rubber layer during curing. Movement through or into the rubber layer during curing can otherwise cause the radio device to either be exposed through the surface of the rubber layer (and visible within the tire) where it will be prone to damage or to sink into the inner liner creating a potential for damage to the body ply or plies.

### Rubber Layer

As mentioned above, according to the first and second embodiments, the radio device is surrounded by a rubber layer having a specified T50 cure time. The rubber layer is comprised of (includes) 100 parts of at least one diene-based rubber, at least one filler and a cure package. As used herein, the phrase diene-based rubber is intended to refer to polymers or copolymers which are made from at least one type of conjugated diene monomer. Generally, non-limiting examples of diene-based rubbers include natural rubber, polyisoprene, styrenebutadiene rubber, and polybutadiene. The particular ingredients used for the at least one diene based rubber, at least one filler, and cure package of the rubber layer may vary, but are selected so as to cause the T50 cure time of the rubber layer to be about 1.5 to about 3.5 minutes or 1.5 to 3.5 minutes (*e.g.,* 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, or 3.5 minutes), preferably about 2 to about 3 minutes or 2 to 3 minutes (e.g., 2.1, 2.2, 2.3, 2.4, 2.5, 2.6, 2.7, 2.8, 2.9, or 3 minutes).

In certain embodiments of the first and second embodiments, the rubber layer will meet at least one of the following: (a) an elongation at break at 23 °C of less than 150% (*e.g.,* 149%, 145%, 140%, 135%, 130%, 125%, 120%, 115%, 110%, 105%, 100%, 95%, 90%, 85%, 80%, 75%, 70%, 65%, 60%, etc.), preferably about 100% to about 70% or 100% to 70% (*e.g*., 100%, 95%, 90%, 85%, 80%, 75%, or 70%); (b) a 50% modulus at 23 °C of at least 3.5 MPa (e.g., 3.5 MPa, 4 MPa, 4.5 MPa, 5 MPa, 5.5 MPa, 6 MPa, 6.5 MPa, 7 MPa, 7.5 MPa, 8 MPa, etc.), preferably about 4 to about 6 MPa or 4 to 6 MPa (*e.g.,* 4 MPa, 4.5 MPa, 5 MPa, 5.5 MPa, or 6 MPa); (c) a tension at break at 23 °C of at least 9 MPa (e.g., 9 MPa, ,9.5 MPa, 10 MPa, 10.5 MPa, 11 MPa, 11.5 MPa, 12 MPa, 12.5 MPa, 13 MPa, 13.5 MPa, 14 MPa, 14.5 MPa, 15 MPa, 15.5 MPa, 16 MPa, 17, MPa, 18 MPa, etc.) preferably about 10 to about 15 MPa or 10 to 15 MPa (*e.g.,* 10 MPa, 10.5 MPa, 11 MPa, 11.5 MPa, 12 MPa, 12.5 MPa, 13 MPa, 13.5 MPa, 14 MPa, 14.5 MPa, or 15 MPa); or (d) a Mooney viscosity ML1+4 at 130 °C of about 43 to about 57 or 43 to 57 (*e.g.,* 43, 44, 45, 46, 47, 48, 49, 50, 51, 52, 53, 54, 55, 56, or 57), preferably about 45 to about 50 or 45 to 50 (*e.g.,* 45, 46, 47, 48, 49 or 50).

An elongation at break measurement (in terms of % elongation) is also referred to as Eb and provides an indication of a rubber composition's tear resistance. A tensile at break measurement (in units of MPa) is also referred to as Tb and provides an indication of a rubber composition's strength by measuring the maximum stress it can withstand before breaking. Elongation at break and tension at break can be measured following the guidelines of, but not restricted to, the standard procedure described in ASTM D-412, with dumbbell-shaped samples having a cross-section dimension of 4 mm in width and 1.9 mm in thickness at the center. During measurement, specimens may be strained at a constant rate (20% per second) and the resulting force recorded as a function of extension (strain). Eb and Tb taken at 23 °C are sometimes referred to as room temperature measurements. A 50% modulus measurement (in terms of MPa) is also referred to as M50 and measures tensile stress of a sample of the rubber composition at 50% elongation. The 50% modulus measurement is not a true modulus measurement and can be measured using the same method described for Eb and Tb. The Mooney viscosity ML1+4 at 130 °C can be determined using an Alpha Technologies Mooney viscometer with a large rotor, a one minute warm-up time, and a four minute running time, and, hence is referred to as Mooney1+4 or ML1+4. More specifically, such Mooney viscosities are measured by preheating an uncured sample to 130 °C for one minute before the rotor starts, and the Mooney viscosity is recorded for each sample as the torque at four minutes after the rotor is started.

In certain embodiments of the first and second embodiments, the rubber layer has a shore A hardness at 23 °C of at least 70 (*e.g.,* 70, 75, 80, 85, 90, 95, or 100), preferably 70 to 90 (*e.g.,* 70, 72, 74, 75, 76, 78, 80, 82, 84, 85, 86, 88, or 90), more preferably 74 to 84 (*e.g.,* 74, 75, 76, 77, 78, 79, 80, 81, 82, 83, or 84). The shore A hardness can be determined according to ASTM D2240, with a sample size having a minimum 0.25 inch gauge and 1 inch width, and curing conditions of 40 minutes at 150 °C.

In preferred embodiments of the first and second embodiments, the rubber layer meets each of the foregoing (a)-(d), preferably each of (a)-(d) in their preferable ranges; in certain such embodiments, the rubber layer also meets the shore A hardness range, preferably in the preferably range and more preferably in the more preferably range.

According to the first and second embodiments disclosed herein, the rubber or rubbers used to comprise the 100 parts of at least one diene-based rubber in the rubber layer may vary. Overall (or in total), 100 parts of rubber will be present in the rubber layer. As will be understood by those having skill in the art, 100 parts of rubber is used so that the other ingredients of the rubber layer can be discussed in amounts of parts per 100 parts rubber or phr. In preferred embodiments of the first and second embodiments, the at least one diene-based rubber of the rubber layer includes a majority by weight in total (*e.g.,* 51%, 55%, 60%, 65%, 70%, 75%, 80%, 855, 90%, 95%, or even 100%) of polybutadiene, polyisoprene, natural rubber, or mixtures thereof, and preferably no more than 10 parts in total (*e.g.,* 10 parts, 5 parts, 4 parts, 3 parts, 2 parts, 1 part, or even 0 parts) of EPDM, butyl rubber, halogenated butyl rubber, or nitrile rubber. In more preferred embodiments of the foregoing, the at least one diene-based rubber of the rubber layer includes at least 60%, at least 70%, at least 80%, at least 90% or even 100% by weight of polybutadiene, polyisoprene, natural rubber, or mixtures thereof. In certain embodiments of the first and second embodiments, any polybutadiene that is used in the rubber layer is a high-cis polybutadiene, which can be considered to be a polybutadiene having a cis bond content of at least 90%, more preferably at least 92%. High-cis polybutadienes generally have Tgs that are relatively low, *e.g.,* less than -100 °C. In other embodiments of the first and second embodiments, any polybutadiene that is used in the rubber layer has a lower cis bond content, *e.g.,* less than 90%, and a higher Tg, *e.g.,* in the range of about -85 to about -55 °C or - 85 to -55 °C (e.g., -85, -80, -75, -70, -65, -60, or -55 °C), preferably about -80 to about -60 ° C or - 80 to -60 °C (*e.g.,* -60, -65, -70, -75, or -80 °C). In certain embodiments of the first and second embodiments, any polybutadiene rubber that is used in the rubber layer is not functionalized. In other embodiments of the first and second embodiments, any polybutadiene rubber that is used in the rubber layer is functionalized (*e.g.,* by use of an end-functional compound and/or a coupling agent). In yet other embodiments of the first and second embodiments, a combination of functionalized polybutadiene and non-functionalized polybutadiene rubbers are used in the rubber layer.

According to the first and second embodiments disclosed herein, the at least one filler of the rubber layer may vary. In preferred embodiments of the first and second embodiments, the at least one filler of the rubber layer includes carbon black, preferably in an amount of about 30 to about 50 phr or 30 to 50 phr *(e.g.,* 30, 35, 40, 45, or 50 phr). When carbon black is used in the rubber layer, *e.g.,* in one of the foregoing amounts, the carbon black is preferably selected from N300 series, N500 series, or a combination thereof. Non-limiting examples of N300 series carbon blacks include N330 and N351. Non-limiting examples of N500 series carbon blacks include N550 carbon black, as designated by ASTM D-1765-82a. Any carbon black used in the rubber layer is preferably a reinforcing carbon black, such as one having a surface area of at least about 20 m²/g (including at least 20 m²/g) and, more preferably, at least about 35 m²/g up to about 200 m²/g or higher (including 35 m²/g up to 200 m²/g). Surface area values used herein for carbon blacks are determined by ASTM D-1765 using the cetyltrimethylammonium bromide (CTAB) technique. In preferred embodiments of the first and second embodiments, the rubber layer includes a limited amount of silica (*e.g.,* less than 5 phr, 4 phr, 3 phr, 2 phr, 1 phr), even more preferably no silica (*i.e.,* 0 phr silica).

In preferred embodiments of the first and second embodiments, the cure package of the rubber layer includes sulfur as a vulcanizing agent and at least one vulcanization accelerator with a weight ratio of vulcanization accelerator to sulfur of at least 0.7:1 *(e.g.,* 0.7:1, 0.8:1, 0.9:1, 1:1, 1.1:1, 1.2:1, 1.3:1, 1.4:1, 1.5:1, 1.6:1, 1.7:1, etc.), preferably at least 0.9:1 or 0.9:1 to 1.5:1 *(e.g.,* 0.9:1, 1:1, 1.1:1, 1.2:1, 1.3:1, 1.4:1, or 1.5:1). Examples of specific suitable sulfur vulcanizing agents include "rubbermaker's" soluble sulfur; sulfur donating curing agents, such as an amine disulfide, polymeric polysulfide, or sulfur olefin adducts; and insoluble polymeric sulfur. Preferably, the sulfur vulcanizing agent is soluble sulfur or a mixture of soluble and insoluble polymeric sulfur. The specific vulcanization accelerator or accelerators used in the cure package of the rubber layer may vary. Generally, the sulfur vulcanizing agent(s) may be used in certain embodiments of the first and second embodiments in a total amount ranging from 1 to 12 phr *(e.g.,* 1, 2, 3, 4, 5, 6, 7, 8, 9, 10, 11, or 12 phr), including from 3 to 10 phr *(e.g.,* 3, 4, 5, 6, 7, 8, 9, or 10 phr), and 5 to 8 phr (*e.g.,* 5, 6, 7, or 8 phr) and the at least one vulcanization accelerator may be used in a total amount ranging from 0.7 to 10 phr (*e.g.,* 0.7, 1, 1.5, 2, 2.5, 3, 3.5, 4, 4.5, 5, 5.5, 6, 6.5, 7, 7.5, 8, 8.5, 9, 9.5, or 10 phr), including 1 or 8 phr (*e.g.,* 1, 1.5, 2, 2.5, 3, 3.5, 4, 4.5, 5, 5.5, 6, 6.5, 7, 7.5, or 8 phr), with the weight ratio of vulcanization accelerator to sulfur being as discussed above. In preferred embodiments of the first and second embodiments, the at least one vulcanization accelerator used in the rubber layer includes or is an ultra fast vulcanization accelerator. Generally, the following classes of vulcanization accelerators can be considered to be ultra-fast vulcanization accelerators: thiophosphates, thioureas, thiurams, dithiocarbamates, and xanthates. Non-limiting examples of a suitable thiophosphates include zinc-O,O-di-N-phosphorodithioate (ZBDP). Non-limiting examples of suitable thioureas include ethylene thiourea (ETU), di-pentamethylene thiourea (DPTU), and dibutyl thiourea (DBTU). Non-limiting examples of suitable thiurams include thiuram monosulfides and thiuram polysulfides (examples of which include TMTM (tetramethyl thiuram monosulfide), TMTD (tetramethyl thiuram disulfide), DPTT (dipentamethylene thiuram tetrasulfide), TETD (tetraethyl thiuram disulfide), TiBTD (tetraisobutyl thiuram disulfide), and TBzTD (tetrabenzyl thiuram disulfide)). Non-limiting examples of dithiocarbamates include zinc dimethyldithiocarbamate (ZDMC), zinc diethyldithiocarbamate (ZDEC), zinc dibutyldithiocarbamate (ZDBC), and zinc dibenzyldithiocarbamate (ZDBC). Non-limiting examples of a suitable xanthate includes zinc-isopropyl xanthate (ZIX).

The rubber layer may also include one or more additional ingredients, including but not limited to, one or more plasticizers (*e.g.,* liquid plasticizers such as oils or more solid plasticizers such as hydrocarbon resins), one or more antioxidants, one or more vulcanization activators (*e.g.,* zinc oxide, stearic acid, and the like), one or more vulcanizing inhibitors, and one or more anti-scorching agents. According to the first and second embodiments disclosed herein, the rubber layer may include any or all of the foregoing additional ingredients.

In those embodiments of the first and second embodiments where the rubber layer includes one or more plasticizers, the particular type(s) and amount(s) of plasticizer(s) used may vary. Various plasticizers are suitable for use in the rubber layer, including, but not limited to, liquid plasticizing agents such as oils and more solid plasticizing agents such as hydrocarbon resins. By stating that a plasticizing agent is liquid is meant to refer to its state at room temperature of 23 °C. Any liquid plasticizer or oil may be present as an extender oil (used to extend one of the diene-based rubbers) and/or used as a free oil (added separately during mixing). Suitable liquid plasticizing agents such as oils include, but are not limited to, aromatic, naphthenic, and low PCA oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Suitable low PCA oils include mild extraction solvates (MES), treated distillate aromatic extracts (TDAE), TRAE, and heavy naphthenics. Suitable MES oils are available commercially as CATENEX SNR from SHELL, PROREX 15, and FLEXON 683 from EXXONMOBIL, VIVATEC 200 from BP, PLAXOLENE MS from TOTAL FINA ELF, TUDALEN 4160/4225 from DAHLEKE, MES-H from REPSOL, MES from Z8, and OLIO MES S201 from AGIP. Suitable TDAE oils are available as TYREX 20 from EXXONMOBIL, VIVATEC 500, VIVATEC 180, and ENERTHENE 1849 from BP, and EXTENSOIL 1996 from REPSOL. Suitable heavy naphthenic oils are available as SHELLFLEX 794, ERGON BLACK OIL, ERGON H2000, CROSS C2000, CROSS C2400, and SAN JOAQUIN 2000L. Suitable low PCA oils also include various plant-sourced oils such as can be harvested from vegetables, nuts, and seeds. Non-limiting examples include, but are not limited to, soy or soybean oil, sunflower oil (including high oleic sunflower oil), safflower oil, corn oil, linseed oil, cotton seed oil, rapeseed oil, cashew oil, sesame oil, camellia oil, jojoba oil, macadamia nut oil, coconut oil, and palm oil. The foregoing processing oils can be used as an extender oil, *i.e.,* to prepare an oil-extended polymer or copolymer or as a processing or free oil. According to the first and second embodiments, the total amount of oil used (processing oil and any extender oil) in the rubber layer is from about 1 to about 20 phr or 1 to 20 phr (e.g., 1, 5, 10, 15, or 20 phr), preferably about 1 to about 10 phr or 1 to 10 phr (*e.g.,* 1, 2, 3, 4, 5, 6, 7, 8, 9, or 10 phr). Suitable hydrocarbon resins for use in the rubber layer may vary and include but are not limited to cyclopentadiene or dicyclopentadiene homopolymer or copolymer resins; terpene homopolymer or copolymer resins; phenol homopolymer or copolymer resins; C5 or C9 fraction homopolymer or copolymer resins; alpha-methylstyrene homopolymer or copolymer resins, and combinations thereof. According to the first and second embodiments, the total amount of hydrocarbon resin used in the rubber layer is about 1 to about 10 phr or 1 to 10 phr (*e.g.,* 1, 2, 3, 4, 5, 6, 7, 8, 9, or 10 phr), preferably about 1 to about 5 phr or 1 to 5 phr (*e.g.,* 1, 2, 3, 4, or 5 phr). In preferred embodiments of the first and second embodiments, the total amount of plasticizing agent is no more than 10 phr (*e.g.,* 10, 9, 8, 7, 6, 5, 4 phr or less), including no more than 5 phr, etc.

In those embodiments of the first and second embodiments where the rubber layer includes one or more antioxidants, the particular type(s) and amount(s) used may vary. Various antioxidants are known to those of skill in the art and may be utilized in the rubber layer, including but not limited to certain waxes, phenolic antioxidants, amine phenol antioxidants, hydroquinone antioxidants, alkyldiamine antioxidants, and amine compound antioxidants such as N-phenyl-N'-isopropyl-p-phenylenediamine (IPPD), or N-(1,3-dimethylbutyl)-N'-phenyl-phenylenediamine (6PPD). One or more than one type as well as one or more than one of each type may be utilized in certain embodiments. Generally, the total amount of antioxidant(s) used in the rubber layer is 1 to 5 phr (*e.g.,* 1, 2, 3, 4, or 5 phr).

In those embodiments of the first and second embodiments where the rubber layer includes one or more vulcanization activators, the particular type(s) and amount(s) used may vary. Generally, vulcanization activators are additives used to support vulcanization and include both an inorganic and organic component. Zinc oxide is the most widely used inorganic vulcanization activator. Various organic vulcanization activators are commonly used including stearic acid, palmitic acid, lauric acid, and zinc salts of each of the foregoing. Generally, the total amount of vulcanization activator used ranges from 0.1 to 6 phr *(e.g.,* 0.1, 0.5, 1, 1.5, 2, 2.5, 3, 3.5, 4, 4.5, 5, 5.5, or 6 phr), preferably 0.5 to 4 phr (*e.g.,* 0.5, 1, 1.5, 2, 2.5, 3, 3.5, or 4 phr), preferably from a combination of zinc oxide and stearic acid.

In those embodiments of the first and second embodiments where the rubber layer includes one or more vulcanization inhibitors, the particular vulcanization inhibitor(s) used and amount(s) may vary. Generally, vulcanization inhibitors are used to control the vulcanization process and retard or inhibit vulcanization until the desired time and/or temperature is reached. Common vulcanization inhibitors include, but are not limited to, PVI (cyclohexylthiophthalmide) from Santogard. Generally, the amount of vulcanization inhibitor is 0.1 to 3 phr (*e.g.,* 0.1, 0.5, 1, 1.5, 2, 2.5, or 3 phr), preferably 0.5 to 2 phr (*e.g.,* 0.5, 1, 1.5, or 2 phr).

In those embodiments of the first and second embodiments where the rubber layer includes one or more anti-scorching agents, the particular type(s) and amount(s) used may vary. For a general disclosure of suitable anti-scorching (as well as other components used in curing), one can refer to Kirk-Othmer, Encyclopedia of Chemical Technology, 3rd ed., Wiley Interscience, N.Y. 1982, Vol. 20, pp. 365 to 468, particularly Vulcanization Agents and Auxiliary Materials, pp. 390 to 402, or Vulcanization by A. Y. Coran, Encyclopedia of Polymer Science and Engineering, Second Edition (1989 John Wiley & Sons, Inc.).

### Formation of the Rubber Layer

The rubber layer will generally be prepared according to conventionally practiced methods comprising mixing the ingredients in at least one non-productive master-batch stage and a final productive mixing stage. In certain embodiments of the first and second embodiments, the rubber layer is prepared by combining the ingredients of its applicable rubber composition (as disclosed above) by methods known in the art, such as, for example, by kneading the ingredients together in a Banbury mixer or on a milled roll. Such methods generally include at least one non-productive master-batch mixing stage and a final productive mixing stage. The term non-productive master-batch stage is known to those of skill in the art and generally understood to be a mixing stage (or stages) where no vulcanizing agents or vulcanization accelerators are added. The term final productive mixing stage is also known to those of skill in the art and generally understood to be the mixing stage where the vulcanizing agents and vulcanization accelerators are added into the rubber composition. In certain embodiments of the first and second embodiments, the rubber layer is prepared from a rubber composition that has been prepared by a process comprising more than one non-productive master-batch mixing stage.

Generally, the rubbers (or polymers) and filler will be added in a non-productive or master-batch mixing stage or stages. Generally, at least the vulcanizing agent component and the vulcanizing accelerator component of a cure package will be added in a final or productive mixing stage.

In certain embodiments of the first and second embodiments, the rubber layer is prepared from a rubber composition that has been prepared using a process wherein at least one non-productive master batch mixing stage conducted at a temperature of about 130 °C to about 200 °C. In certain embodiments of the first and second embodiments, the rubber layer is prepared from a rubber composition that has been prepared using a final productive mixing stage conducted at a temperature below the vulcanization temperature in order to avoid unwanted pre-cure of the rubber composition. Therefore, the temperature of the productive or final mixing stage generally should not exceed about 120 °C and is typically about 40 °C to about 120 °C, or about 60 °C to about 110°C and, especially, about 75 °C to about 100 °C. In certain embodiments of the first and second embodiments, the rubber layer is prepared from a rubber composition that has been prepared according to a process that includes at least one non-productive mixing stage and at least one productive mixing stage.

Once the ingredients for the rubber layer have been prepared such as according to the above-described mixing procedure, a layer can be formed therefrom. Various methods are suitable for forming the rubber layer, including, but not limited to, calendaring or an extrusion process. In preferred embodiments of the first and second embodiment, the rubber layer is formed by calendaring. As those of skill in the art will understand, calendaring is a process whereby rubber is moved through a series of rolls (some of which may be heated) including rolls that are arranged in pairs to produce a rubber layer (or rubber sheets used to form the rubber layer discussed herein). In preferred embodiments of the first and second embodiments, the radio device becomes surrounded by the rubber layer based upon the use of two separate sheets of the rubber layer (each having the same composition and same T50 cure time) between which the radio device is sandwiched and then cured. Since the two sheets of the rubber layer essentially become one continuous rubber layer during curing, the resulting cured rubber layer can be considered one layer or a layer rather than layers. In other embodiments of the first and second embodiments, the radio device becomes surrounded by the rubber layer based upon the use of one single sheet of the rubber layer between which the radio device is sandwiched and then cured. Various methods may be used to surround the radio device with a rubber layer using a single sheet of the rubber layer including, but not limited to, folding the rubber sheet/layer over with the radio device sandwiched between. As those of skill in the art will also understand, various forms of extrusion may be suitable for use in forming the rubber layer discussed herein (or the sheet(s) used to form the rubber layer), non-limiting types of which include roller die extrusion.

As mentioned above, according to the first and second embodiments, the rubber layer has a thickness of about 0.4 to about 3 mm or 0.4 to 3 mm (*e.g.,* 0.4, 0.5, 0.6, 0.7, 0.8, 0.9, 1, 1.5, 2, 2.5, or 3 mm), preferably about 0.5 to about 2 mm or 0.5 to 2 mm (*e.g.,* 0.5, 0.6, 0.7, 0.8, 0.9, 1, 1.5, or 2 mm).

### Positioning of The Radio Device Within The Tire

As mentioned above, when an electronic communication module which includes a radio device is incorporated into a tire, the particular location or mounting configuration may vary. Generally, the radio device will be placed into an uncured tire only after it has been surrounded by the rubber layer in uncured form. Curing of the rubber layer takes place during curing of the overall tire. In its uncured state, the tire including any of its components such as an inner liner, one or more body plies, carcass ply, bead, and bead filler can be considered to be an uncured tire carcass. When described as being located within a cured tire, the rubber layer surrounding the radio device will also be cured.

In preferred embodiments of the first and second embodiments, the enclosed radio device (i.e., the radio device surrounded by the rubber layer) is positioned against the tire inner liner. According to such an embodiment, the tire includes an inner liner and the radio device (surrounded by the rubber layer) is positioned radially inward of the inner liner.

Alternative positioning of the enclosed radio device within a tire may also be possible. For example, in certain embodiments, the tire includes at least one body ply as well as a bead and bead filler (in addition to the inner liner) , and the enclosed radio device is positioned against the body ply. According to such embodiments, the enclosed ratio device positioned against the body ply may be along a portion of the body ply which covers the bead filler or alternatively along a portion of the body ply which is above the bead filler.

### Curing Of The Tire

According to the second embodiment provided herein, a method is provided for curing a tire with an electronic communication module. The method of the second embodiment can also be understood as a method for providing a tire with an electronic communication module according to the first embodiment or a method for curing a tire according to the first embodiment. (The first embodiment disclosed herein, *i.e.,* a tire having an electronic communication module including a radio device surrounded by a rubber layer, is intended to encompass the tire in uncured form as well as the tire in cured form.) According to the process of the second embodiment, an uncured tire carcass and an electronic communication module including an enclosed radio device surrounded by a rubber layer are provided. The rubber layer is comprised of 100 parts of at least one diene-based rubber, at least one filler, and a cure package and the rubber layer has a T50 cure time at 160 °C of about 1.5 to about 3.5 minutes, preferably about 2 to about 3 minutes. According to the second embodiment, the rubber layer has a thickness of about 0.4 to about 3 mm or 0.4 to 3 mm (*e.g.,* 0.4, 0.5, 0.6, 0.7, 0.8, 0.9, 1, 1.5, 2, 2.5, or 3 mm), preferably about 0.5 to about 2 mm or 0.5 to 2 mm (*e.g.,* 0.5, 0.6, 0.7, 0.8, 0.9, 1, 1.5, or 2 mm). Further according to the process of the second embodiment, the enclosed radio device (*i.e.,* the radio device that is surrounded by the rubber layer) is positioned against at least one component of the uncured tire carcass, and then the uncured tire carcass is cured together with the enclosed radio device. As discussed in more detail *infra,* the at least one component of the uncured tire carcass against which the enclosed radio device is positioned may be chosen from various components including an inner liner or a body ply, preferably an inner liner.

As those of skill in the art will understand, the particular details of the curing of the uncured tire carcass and the positioned enclosed radio device may vary according to factors such as the weight and thickness of the uncured tire carcass. In certain embodiments of the second embodiment, the process of curing takes place at a temperature sufficient to raise the internal temperature of the tire to about 135 to about 165 °C or 135 to 165 °C (*e.g.,* 135, 140, 145, 150, 155, 160, or 165 °C), particularly in embodiments where the uncured tire carcass is for a truck or bus radial tire. In other embodiments of the second embodiment, the process of curing takes place at a temperature sufficient to raise the internal temperature of the tire to about 160 to about 180 °C or 160 to 180 °C (e.g., 160, 165, 170, 175, or 180 °C), particularly when the uncured tire carcass is for a passenger car tire. The internal tire temperature may be achieved by the use of various services (*e.g.,* steam or hot water) which are used in the process of curing. In certain embodiments of the second embodiment, the internal temperature of the service is about 190 to 210 °C or 190 to 210 °C (*e.g.,* 190, 195, 200, 205, or 210 °C) and/or the external temperature of the service is about 140 to about 165 °C or 140 to 165 °C (*e.g.,* 140, 145, 150, 155, 160, or 165 °C). In certain embodiments of the second embodiment, the process of curing also takes place under pressure with exemplary pressures including about 1.6 to about 2.7 MPa (*e.g.,* 1.6, 1.7, 1.8, 1.9, 2, 2.1, 2.2, 2.3, 2.4, 2.5, 2.6, or 2.7 MPa).

In certain embodiments of the second embodiment, the process of curing makes use of a pebble-surface rubber curing bladder. Generally, the overall process of curing an uncured tire carcass will include the use of a tire curing apparatus (*e.g.,* a tire press) which will cure or vulcanize the uncured tire carcass by applying both internal and external heat and pressure. A tire press generally uses a heated outer metal mold that serves to shape and vulcanize the outside of the tire and is often used in conjunction with a rubber curing bladder that is inflated in the inside of the tire carcass and heated to vulcanize the interior of the tire. The use of a pebble-surface rubber curing bladder in the processes of the second embodiment can be useful in preventing cracks due to the pebble-grained surface allowing escape of air from between the inner surface of the green (uncured tire carcass) and the curing bladder. Air that is trapped could otherwise lead to cracks along the edge of the radio device or RFID during curing which may cause stress concentration areas that may adversely impact durability. According to such an embodiment, the pebble surface will be present on the outer surface of the curing bladder which is the surface that contacts the tire during inflation and curing.

During the process of curing an uncured tire carcass, a release treatment may be applied to the surface of the inner liner (or alternatively to the radially innermost component of the uncured tire carcass) prior to curing in order to avoid sticking or co-curing of the inner liner to the curing bladder during the curing process. Various release treatments are known to be useful for such purposes including, but not limited to, silicone lubricants and polysiloxane-containing release treatments. In certain embodiments of the first and second embodiments disclosed herein, the area of the tire component (*e.g.,* inner liner or body ply) to which the enclosed radio device is positioned against will be free of release treatment. Having this area of the tire component free of release treatment (prior to positioning the enclosed radio device) can be useful in preventing undesirable bonding with the tire component (*e.g.,* the inner liner). The presence of release treatment in the area of the tire component to which the enclosed radio device is positioned and any resulting bonding (*e.g.,* to the inner liner) can lead to cracks along the edge of the radio device or RFID that may adversely impact durability.

This application discloses several numerical range limitations that support any range within the disclosed numerical ranges, even though a precise range limitation may not be stated verbatim in the specification, because the embodiments of the compositions and methods disclosed herein could be practiced throughout the disclosed numerical ranges. With respect to the use of substantially any plural or singular terms herein, those having skill in the art can translate from the plural to the singular or from the singular to the plural as is appropriate to the context or application. The various singular or plural permutations may be expressly set forth herein for sake of clarity.

It will be understood by those within the art that, in general, terms used herein, and especially in the appended claims are generally intended as "open" terms. For example, the term "including" should be interpreted as "including but not limited to," the term "having" should be interpreted as "having at least," the term "includes" should be interpreted as "includes but is not limited to." It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (*e.g.,* "a" or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (*e.g.,* the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (*e.g.,* " a system having at least one of A, B, and C" would include but not be limited to systems that have A alone, B alone, C alone, A and B together, A and C together, B and C together, and/or A, B, and C together, etc.). It will be further understood by those within the art that virtually any disjunctive word or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." While various aspects and embodiments of the compositions and methods have been disclosed herein, other aspects and embodiments will be apparent to those skilled in the art. The various aspects and embodiments disclosed herein are for purposes of illustration and are not intended to be limiting, the invention being defined by the claims.

## Claims

1. A tire having an electronic communication including a radio device surrounded by a rubber layer comprised of 100 parts of at least one diene-based rubber, at least one filler, and a cure package, wherein the rubber layer has a T50 cure time at 160 °C of 1.5 to 3 minutes, and a thickness of 0.4 to 3 mm, preferably 0.5 to 2 mm.

2. The tire of claim 1, wherein the rubber layer meets at least one of the following, preferably all of the following:
a. an elongation at break at 23 °C of less than 150%, preferably 100 to 70%;
b. a 50% modulus at 23 °C of at least 3.5 MPa, preferably 4 to 6 MPa;
c. a tension at break at 23 °C of at least 9 MPa, preferably 10 to 15 MPa; or
d. a Mooney viscosity ML1+4 at 130 °C of 43 to 57, preferably 45 to 50,
wherein elongation at break, 50% modulus, and tension at break are measured according to ASTM D-412 and Mooney viscosity is measured using a viscometer with a large rotor, a one minute warm-up time, and a four minute running time, wherein the warm-up time includes preheating an uncured sample to 130 °C for one minute before the rotor starts, and the Mooney viscosity is recorded as the torque at four minutes after the rotor is started.

3. The tire of claim 1 or claim 2, wherein the 100 parts of the at least one diene-based rubber of the rubber layer includes a majority by weight of polybutadiene, polyisoprene, natural rubber, or mixtures thereof, and preferably no more than 10 parts in total of EPDM, butyl rubber, halogenated butyl rubber, or nitrile rubber.

4. The tire of any one of claims 1-3, wherein the entirety of the 100 parts of the at least one diene-based rubber of the rubber layer is selected from the group consisting of polybutadiene, polyisoprene, natural rubber, and mixtures thereof.

5. The tire of any one of claims 1-4, wherein the at least one filler of the rubber layer includes 30 to 50 phr of carbon black, preferably selected from N300 grades, N500 grades, or a combination thereof, wherein ASTM D-1765 is used for carbon black grade designation.

6. The tire of any one of claims 1-5, wherein the cure package of the rubber layer includes sulfur as a vulcanizing agent and at least one vulcanization accelerator with a weight ratio of vulcanization accelerator to sulfur of at least 0.7:1, preferably at least 0.9:1 or 0.9:1 to 1.5:1.

7. The tire of any one of claims 1-6, wherein the tire includes an inner liner and the radio device is positioned radially inward of the inner liner.

8. A method for curing a tire with an electronic communication module, the method comprising
providing an uncured tire carcass and an electronic communication module including an enclosed radio device surrounded by a rubber layer comprised of 100 parts of at least one diene-containing rubber, at least one filler, and a cure package, wherein the rubber layer has a T50 cure time at 160 °C of 1.5 to 3 minutes, and the rubber layer has a thickness of 0.4 to 3 mm, preferably 0.5 to 2 mm, and
positioning the enclosed radio device against at least one component of the uncured tire carcass, and then curing the uncured tire carcass together with the enclosed radio device.

9. The method of claim 8, wherein the curing includes use of a pebble-surface rubber curing bladder.

10. The method of claim 8 or claim 9, wherein the rubber layer meets at least one of the following, preferably all of the following:
a. an elongation at break at 23 °C of less than 150%, preferably 100 to 70%;
b. a 50% modulus at 23 °C of at least 3.5 MPa, preferably 4 to 6 MPa;
c. a tension at break at 23 °C of at least 9 MPa, preferably 10 to 15 MPa; or
d. a Mooney viscosity ML1+4 at 130 °C of 43 to 57, preferably 45 to 50,
wherein elongation at break, 50% modulus, and tension at break are measured according to ASTM D-412 and Mooney viscosity is measured using a viscometer with a large rotor, a one minute warm-up time, and a four minute running time, wherein the warm-up time includes preheating an uncured sample to 130 °C for one minute before the rotor starts, and the Mooney viscosity is recorded as the torque at four minutes after the rotor is started.

11. The method of any one of claims 8-10, wherein the 100 parts of the at least one diene-based rubber of the rubber layer includes a majority by weight of polybutadiene, polyisoprene, natural rubber, or mixtures thereof, and preferably no more than 10 parts in total of EPDM, butyl rubber, halogenated butyl rubber, or nitrile rubber.

12. The method of any one of claims 8-11, wherein the entirety of the 100 parts of the at least one diene-based rubber of the rubber layer is selected from the group consisting of polybutadiene, polyisoprene, natural rubber, and mixtures thereof.

13. The method of any one of claims 8-12, wherein the at least one filler of the rubber layer includes 30 to 50 phr of carbon black, preferably selected from N300 grades, N500 grades, or a combination thereof, wherein ASTM D-1765 is used for carbon black grade designation.

14. The method of any one of claims 8-13, wherein the cure package of the rubber layer includes sulfur as a vulcanizing agent and at least one vulcanization accelerator with a weight ratio of vulcanization accelerator to sulfur of at least 0.7:1, preferably at least 0.9:1 or 0.9:1 to 1.5:1.

15. The method of any one of claims 8-14, wherein the at least one component of the uncured tire carcass is an inner liner and the radio device is positioned radially inward of the inner liner.

## Patentansprüche

1. Reifen, der eine elektronische Kommunikation, einschließlich einer Funkvorrichtung, die durch eine Kautschukschicht umgeben ist, die aus 100 Teilen mindestens eines dienbasierten Kautschuks, mindestens einem Füllstoff und einer Vulkanisationspackung besteht, aufweist, wobei die Kautschukschicht eine T50-Vulkanisationszeit bei 160 °C von 1,5 bis 3 Minuten und eine Dicke von 0,4 bis 3 mm, vorzugsweise 0,5 bis 2 mm, aufweist.

2. Reifen nach Anspruch 1, wobei die Kautschukschicht mindestens eines der Folgenden, vorzugsweise jedes der Folgenden, erfüllt:
a. eine Dehnung beim Bruch bei 23 °C von weniger als 150 %, vorzugsweise 100 bis 70 %;
b. einen 50 %-Modul bei 23 °C von mindestens 3,5 MPa, vorzugsweise 4 bis 6 MPa;
c. eine Spannung beim Bruch bei 23 °C von mindestens 9 MPa, vorzugsweise 10 bis 15 MPa; oder
d. eine Mooney-Viskosität ML1+4 bei 130 °C von 43 bis 57, vorzugsweise 45 bis 50,
wobei die Dehnung beim Bruch, der 50 %-Modul und die Spannung beim Bruch gemäß ASTM D-412 gemessen werden und die Mooney-Viskosität unter Verwendung eines Viskosimeters mit einem großen Rotor, einer einminütigen Aufwärmzeit und einer vierminütigen Laufzeit gemessen wird, wobei die Aufwärmzeit ein Vorwärmen einer unvulkanisierten Probe auf 130 °C für eine Minute einschließt, bevor der Rotor startet, und die Mooney-Viskosität als das Drehmoment vier Minuten nachdem der Rotor gestartet wird, aufgezeichnet wird.

3. Reifen nach Anspruch 1 oder 2, wobei die 100 Teile des mindestens einen dienbasierten Kautschuks der Kautschukschicht einen Hauptgewichtsanteil an Polybutadien, Polyisopren, Naturkautschuk oder Mischungen davon und vorzugsweise insgesamt nicht mehr als 10 Teile an EPDM, Butylkautschuk, halogeniertem Butylkautschuk oder Nitrilkautschuk einschließen.

4. Reifen nach einem der Ansprüche 1 bis 3, wobei die Gesamtheit der 100 Teile des mindestens einen dienbasierten Kautschuks der Kautschukschicht aus der Gruppe ausgewählt ist, bestehend aus Polybutadien, Polyisopren, Naturkautschuk und Mischungen davon.

5. Reifen nach einem der Ansprüche 1 bis 4, wobei der mindestens eine Füllstoff der Kautschukschicht 30 bis 50 phr Ruß, vorzugsweise ausgewählt aus N300-Klassen, N500-Klassen oder einer Kombination davon, enthält, wobei ASTM D-1765 für Rußklassenbezeichnung verwendet wird.

6. Reifen nach einem der Ansprüche 1 bis 5, wobei die Vulkanisationspackung der Kautschukschicht Schwefel als Vulkanisationsmittel und mindestens einen Vulkanisationsbeschleuniger mit einem Gewichtsverhältnis von Vulkanisationsbeschleuniger zu Schwefel von mindestens 0,7 : 1, vorzugsweise mindestens 0,9 : 1 oder 0,9:1 bis 1,5 : 1, einschließt.

7. Reifen nach einem der Ansprüche 1 bis 6, wobei der Reifen eine Innenseele einschließt und die Funkvorrichtung radial einwärts der Innenseele positioniert ist.

8. Verfahren zum Vulkanisieren eines Reifens mit einem elektronischen Kommunikationsmodul, das Verfahren umfassend
Bereitstellen einer unvulkanisierten Reifenkarkasse und eines elektronischen Kommunikationsmoduls, einschließlich einer umschlossenen Funkvorrichtung, die durch eine Kautschukschicht umgeben ist, die aus 100 Teilen mindestens eines dienhaltigen Kautschuks, mindestens einem Füllstoff und einer Vulkanisationspackung besteht, wobei die Kautschukschicht eine T50-Vulkanisationszeit bei 160 °C von 1,5 bis 3 Minuten aufweist und die Kautschukschicht eine Dicke von 0,4 bis 3 mm, vorzugsweise 0,5 bis 2 mm, aufweist, und
Positionieren der umschlossenen Funkvorrichtung an mindestens einer Komponente der unvulkanisierten Reifenkarkasse und anschließend Vulkanisieren der unvulkanisierten Reifenkarkasse zusammen mit der umschlossenen Funkvorrichtung.

9. Verfahren nach Anspruch 8, wobei das Vulkanisieren eine Verwendung eines Kautschuk-Vulkanisationsbalgs mit genoppter Oberfläche einschließt.

10. Verfahren nach Anspruch 8 oder 9, wobei die Kautschukschicht mindestens eines der Folgenden, vorzugsweise jedes der Folgenden, erfüllt:
a. eine Dehnung beim Bruch bei 23 °C von weniger als 150 %, vorzugsweise 100 bis 70 %;
b. einen50 %-Modul bei 23 °C von mindestens 3,5 MPa, vorzugsweise 4 bis 6 MPa;
c. eine Spannung beim Bruch bei 23 °C von mindestens 9 MPa, vorzugsweise 10 bis 15 MPa; oder
d. eine Mooney-Viskosität ML1+4 bei 130 °C von 43 bis 57, vorzugsweise 45 bis 50,
wobei die Dehnung beim Bruch, der 50 %-Modul und die Spannung beim Bruch gemäß ASTM D-412 gemessen werden und die Mooney-Viskosität unter Verwendung eines Viskosimeters mit einem großen Rotor, einer einminütigen Aufwärmzeit und einer vierminütigen Laufzeit gemessen wird, wobei die Aufwärmzeit ein Vorwärmen einer unvulkanisierten Probe auf 130 °C für eine Minute einschließt, bevor der Rotor startet, und die Mooney-Viskosität als das Drehmoment vier Minuten nachdem der Rotor gestartet wird, aufgezeichnet wird.

11. Verfahren nach einem der Ansprüche 8 bis 10, wobei die 100 Teile des mindestens einen dienbasierten Kautschuks der Kautschukschicht einen Hauptgewichtsanteil an Polybutadien, Polyisopren, Naturkautschuk oder Mischungen davon und vorzugsweise insgesamt nicht mehr als 10 Teile an EPDM, Butylkautschuk, halogeniertem Butylkautschuk oder Nitrilkautschuk einschließen.

12. Verfahren nach einem der Ansprüche 8 bis 11, wobei die Gesamtheit der 100 Teile des mindestens einen dienbasierten Kautschuks der Kautschukschicht aus der Gruppe ausgewählt ist, bestehend aus Polybutadien, Polyisopren, Naturkautschuk und Mischungen davon.

13. Verfahren nach einem der Ansprüche 8 bis 12, wobei der mindestens eine Füllstoff der Kautschukschicht 30 bis 50 phr Ruß, vorzugsweise ausgewählt aus N300-Klassen, N500-Klassen oder einer Kombination davon, enthält, wobei ASTM D-1765 für Rußklassenbezeichnung verwendet wird.

14. Verfahren nach einem der Ansprüche 8 bis 13, wobei die Vulkanisationspackung der Kautschukschicht Schwefel als Vulkanisationsmittel und mindestens einen Vulkanisationsbeschleuniger mit einem Gewichtsverhältnis von Vulkanisationsbeschleuniger zu Schwefel von mindestens 0,7 : 1, vorzugsweise mindestens 0,9 : 1 oder 0,9:1 bis 1,5 : 1, einschließt.

15. Verfahren nach einem der Ansprüche 8 bis 14, wobei die mindestens eine Komponente der unvulkanisierten Reifenkarkasse eine Innenseele ist und die Funkvorrichtung radial einwärts der Innenseele positioniert ist.

## Revendications

1. Pneu ayant un module de communication électronique comportant un dispositif radio entouré d'une couche de caoutchouc composée de 100 parties d'au moins un caoutchouc à base de diène, d'au moins une charge, et d'un ensemble de vulcanisation, dans lequel la couche de caoutchouc a un temps de vulcanisation T50 à 160 °C de 1,5 à 3 minutes, et une épaisseur de 0,4 à 3 mm, de préférence de 0,5 à 2 mm.

2. Pneu selon la revendication 1, dans lequel la couche de caoutchouc satisfait à au moins l'un de ce qui suit, de préférence à tout ce qui suit :
a. un allongement à la rupture à 23 °C inférieur à 150 %, de préférence de 100 à 70 % ;
b. un module de 50 % à 23 °C d'au moins 3,5 MPa, de préférence de 4 à 6 MPa ;
c. une contrainte de traction à la rupture à 23 °C d'au moins 9 MPa, de préférence de 10 à 15 MPa ; ou
d. une consistance Mooney ML1+4 à 130 °C de 43 à 57, de préférence de 45 à 50,
dans lequel un allongement à la rupture, un module de 50 % et une contrainte de traction à la rupture sont mesurés selon la ASTM D-412 et une consistance Mooney est mesurée à l'aide d'un viscosimètre avec un grand rotor, un temps de préchauffage d'une minute et un temps de fonctionnement de quatre minutes, dans lequel le temps de préchauffage comporte le préchauffage d'un échantillon non vulcanisé à 130 °C pendant une minute avant le démarrage du rotor, et la consistance Mooney est enregistrée comme couple quatre minutes après le démarrage du rotor.

3. Pneu selon la revendication 1 ou la revendication 2, dans lequel les 100 parties de l'au moins un caoutchouc à base de diène de la couche de caoutchouc comportent, en poids, une majorité de polybutadiène, de polyisoprène, de caoutchouc naturel, ou de mélanges de ceux-ci, et de préférence, pas plus de 10 parties au total d'EPDM, de caoutchouc butyle, de caoutchouc butyle halogéné ou de caoutchouc nitrile.

4. Pneu selon l'une quelconque des revendications 1 à 3, dans lequel la totalité des 100 parties de l'au moins un caoutchouc à base de diène de la couche de caoutchouc est choisie dans le groupe constitué de polybutadiène, de polyisoprène, de caoutchouc naturel, et de mélanges de ceux-ci.

5. Pneu selon l'une quelconque des revendications 1 à 4, dans lequel l'au moins une charge de la couche de caoutchouc comporte 30 à 50 phr de noir de carbone, de préférence, choisi parmi des grades N300, des grades N500, ou une combinaison de ceux-ci, dans lequel ASTM D-1765 est utilisée pour la désignation de grade de noir de carbone.

6. Pneu selon l'une quelconque des revendications 1 à 5, dans lequel l'ensemble de vulcanisation de la couche de caoutchouc comporte du soufre en tant qu'agent de vulcanisation et au moins un accélérateur de vulcanisation, avec un rapport de poids del'accélérateur de vulcanisation au soufre d'au moins 0,7:1, de préférence d'au moins 0,9:1 ou de 0,9:1 à 1,5:1.

7. Pneu selon l'une quelconque des revendications 1 à 6, dans lequel le pneu comporte un revêtement intérieur et le dispositif radio est positionné radialement vers l'intérieur par rapport au revêtement intérieur.

8. Procédé destiné à vulcaniser un pneu avec un module de communication électronique, le procédé comprenant
la fourniture d'une carcasse de pneu non vulcanisée et d'un module de communication électronique comportant un dispositif radio fermé entouré d'une couche de caoutchouc composée de 100 parties d'au moins un caoutchouc contenant du diène, d'au moins une charge, et d'un ensemble de vulcanisation, dans lequel la couche de caoutchouc a un temps de vulcanisation T50 à 160 °C de 1,5 à 3 minutes, et la couche de caoutchouc a une épaisseur de 0,4 à 3 mm, de préférence de 0,5 à 2 mm, et
le positionnement du dispositif radio fermé contre au moins un composant de la carcasse de pneu non vulcanisée, puis la vulcanisation de la carcasse de pneu non vulcanisée conjointement avec le dispositif radio fermé.

9. Procédé selon la revendication 8, dans lequel la vulcanisation comporte l'utilisation d'une vessie de vulcanisation de caoutchouc à surface de galets.

10. Procédé selon la revendication 8 ou la revendication 9, dans lequel la couche de caoutchouc satisfait à au moins l'un de ce qui suit, de préférence à tout ce qui suit :
a. un allongement à la rupture à 23 °C inférieur à 150 %, de préférence de 100 à 70 % ;
b. un module de 50 % à 23 °C d'au moins 3,5 MPa, de préférence de 4 à 6 MPa ;
c. une contrainte de traction à la rupture à 23 °C d'au moins 9 MPa, de préférence de 10 à 15 MPa ; ou
d. une consistance Mooney ML1+4 à 130 °C de 43 à 57, de préférence de 45 à 50,
dans lequel un allongement à la rupture, un module de 50 % et une contrainte de traction à la rupture sont mesurés selon la ASTM D-412 et une consistance Mooney est mesurée à l'aide d'un viscosimètre avec un grand rotor, un temps de préchauffage d'une minute et un temps de fonctionnement de quatre minutes, dans lequel le temps de préchauffage comporte le préchauffage d'un échantillon non vulcanisé à 130 °C pendant une minute avant le démarrage du rotor, et la consistance Mooney est enregistrée comme couple quatre minutes après le démarrage du rotor.

11. Procédé selon l'une quelconque des revendications 8 à 10, dans lequel les 100 parties de l'au moins un caoutchouc à base de diène de la couche de caoutchouc comportent, en poids, une majorité de polybutadiène, de polyisoprène, de caoutchouc naturel, ou de mélanges de ceux-ci, et de préférence, pas plus de 10 parties au total d'EPDM, de caoutchouc butyle, de caoutchouc butyle halogéné ou de caoutchouc nitrile.

12. Procédé selon l'une quelconque des revendications 8 à 11, dans lequel la totalité des 100 parties de l'au moins un caoutchouc à base de diène de la couche de caoutchouc est choisie dans le groupe constitué de polybutadiène, de polyisoprène, de caoutchouc naturel, et de mélanges de ceux-ci.

13. Procédé selon l'une quelconque des revendications 8 à 12, dans lequel l'au moins une charge de la couche de caoutchouc comporte 30 à 50 phr de noir de carbone, de préférence, choisi parmi des grades N300, des grades N500, ou une combinaison de ceux-ci, dans lequel ASTM D-1765 est utilisée pour la désignation de grade de noir de carbone.

14. Procédé selon l'une quelconque des revendications 8 à 13, dans lequel l'ensemble de vulcanisation de la couche de caoutchouc comporte du soufre en tant qu'agent de vulcanisation et au moins un accélérateur de vulcanisation, avec un rapport de poids de l'accélérateur de vulcanisation au soufre d'au moins 0,7:1, de préférence d'au moins 0,9:1 ou de 0,9:1 à 1,5:1.

15. Procédé selon l'une quelconque des revendications 8 à 14, dans lequel l'au moins un composant de la carcasse de pneu non vulcanisée est un revêtement intérieur et le dispositif radio est positionné radialement vers l'intérieur par rapport au revêtement intérieur.
